# EUROPÄISCHE PATENTANMELDUNG

(11) **EP 1 630 063 A1**
(43) Veröffentlichungstag der Anmeldung: **01.03.2006**
(21) Anmeldenummer: 04020457.0
(22) Anmeldetag: 27.08.2004
(51) Int. Cl.: B62B 5/00, B62B 3/00

(54) **Transport-/Lager- Vorrichtung für Waren**

(71) Anmelder: Dobinsky, Wolf A., Dr., 65929 Frankfurt/Main-Höchst (DE)
(72) Erfinder: Dobinsky, Wolf A., Dr., 65929 Frankfurt/Main-Höchst (DE)
(74) Vertreter: Koepe, Gerd L.

(57) **Zusammenfassung**

Die Erfindung betrifft eine Transport- und/oder Lager-Vorrichtung (1) für Gegenstände, umfassend einen Behälter (10) für das Aufnehmen von Gegenständen; und an dem Behälter (10) mindestens eine Einrichtung (20), die das Einbringen des Behälters (10) in ein Fahrzeug und/oder das Anbringen des Behälters (10) an einem Lagerort und/oder das Befestigen des Behälters (10) an oder auf einem leicht bewegbaren Gestell erlaubt. Die Erfindung betrifft auch die Verwendung einer solchen Vorrichtung (1).

## Beschreibung

Die vorliegende Erfindung betrifft eine Transport-/Lager-Vorrichtung für Waren und gegebenenfalls auch Personen wie Babys oder gegebenenfalls von Tieren. Insbesondere betrifft die vorliegende Erfindung eine Vorrichtung zum Transportieren und/oder Lagern von Waren, die sich an den Bedürfnissen älterer oder behinderter oder körperlich schwacher Menschen orientiert, denen es nicht möglich ist oder sehr schwer fällt, Lasten über eine gewisse, insbesondere eine größere Entfernung zu transportieren, insbesondere wenn ein solcher Transport durch Hindernisse wie Stufen, Treppen oder größere Entfernungen erschwert wird.

Ältere und/oder behinderte Menschen haben erfahrungsgemäß größere Schwierigkeiten, Lasten über größere Entfernungen zu transportieren. Dies kann beispielsweise bereits den Einkauf betreffen, wenn dieser schwere Waren wie beispielsweise Dosen oder Flaschen umfaßt, insbesondere in größerer Zahl, beispielsweise einen Kasten Mineralwasser oder eine Kiste Wein, jedoch auch den Einkauf größerer Warenmengen, die in der Summe ein beträchtliches Gewicht ausmachen können. Der Transport solcher Waren stellt insbesondere dann ein Problem dar, wenn Stufen, längere Treppen, oder größere Entfernungen oder Anstiege bzw. Gefälle als Hinderniss(e) vorhanden sind. In vielen Fällen lassen sich im Zusammenhang beispielsweise mit dem Einkauf auftretende Transportprobleme nur mit Hilfe einer Hilfsperson bewältigen. Aber auch beim Fehlen solcher Hindernisse sind schwere oder umfangreiche Einkäufe für ältere und/oder behinderte Menschen oft beschwerlich: Das Tragen schwerer Lasten gerade über größere Entfernungen ist nicht nur unbequem, sondern stellt in Einzelfällen auch ein gesundheitliches Risiko dar, weil beim "Verheben" Probleme wie Hexenschuß, Bandscheibenvorfälle oder "lediglich" schmerzende Muskeln auftraten, die natürlicherweise - auch aus ärztlicher Sicht - nicht erwünscht sind.

Ein mindestens genauso großes Problem besteht für Personen (Frauen oder Männer), die einen Kinderwagen mit einem Baby (oder auch ohne dieses) transportieren müssen. Zwar sind Baby- oder Kinderwagen meist mit einem mit diesen (heute meist lösbar) verbundenen, bereiften Fahrgestell versehen. Das Verladen dieses Wagens in ein Fahrzeug und das Transportieren des Wagens im Fahrzeug stellt jedoch häufig - besonders für Frauen - ein Problem dar.

Abhilfe haben im Zusammenhang mit dem Warentransport bisher nur das Problem umgehende oder mindernde Vorschläge geschaffen. Vor Ort, d. h. beim Einkauf beim Händler, wurden (meist aus stabilem Stahldraht und einer entsprechenden starren Unterkonstruktion bestehende) Einkaufswagen unentgeltlich oder gegen eine Leihgebühr oder ein Pfand bereitgehalten und dem Kunden zur Verfügung gestellt. Derartige Einkaufswagen existieren inzwischen auch in standardisierter Form. Diese Einkaufswagen erlauben ein bequemes Einkaufen, und moderne Kassenkonstruktionen ermöglichen inzwischen meist auch ein Zahlen der Ware, ohne daß der Wagen vollständig auf ein Kassen-Förderband entleert werden muß. Spätestens jedoch nach der Kasse mußte der (u. U. schwere und/oder umfangreiche) Einkauf in kleinere Gebinde (Taschen, Körbe, Netze, Kartons, Baumwolltaschen, Papiertüten oder KunststoffTüten etc.) umgepackt werden. Bei Einbindung eines Privat-Kraftfahrzeugs in die Transportlogistik zwischen Geschäft und privatem Bereich mußten die (z. T. schweren) Lasten aus einem solchen Einkaufswagen heraus und in das Fahrzeug hinein getragen/gehoben werden; entsprechendes galt für das Ausladen daheim, wo meist ein Einkaufswagen - wie im Laden - zum Transport von Lasten über eine größere Entfernung oder über Hindernisse nicht zur Verfügung stand.

Als Alternative oder für zusätzliche Transportaufgaben wurde auch angeregt, Lasten in Taschen mit Rollen zu transportieren. Dieser Vorschlag erleichtert manche Transport-Aufgabe, ist jedoch auch nicht zur Lösung aller Probleme geeignet, beispielsweise nicht zur Erleichterung des Transports großer Lasten (Kasten mit Mineralwasser-Flaschen, Kiste mit Wein-Flaschen usw.). Auch die Alternative, solche Lasten mittels mit Rollen oder Rädern versehener, gegebenenfalls an die Größe der Last durch Zusammenklappen adaptierbarer Lasten-Roller zu transportieren, hat zumindest beim Transportieren schwerer Lasten oder beim Transportieren über Hindernisse seine Grenzen.

Weiter war es in vielen Fällen gerade bei älteren und/oder behinderten Personen problematisch, schwere Lasten (als Beispiel seien nochmals Kästen mit Mineralwasserflaschen genannt) überhaupt zu heben. Von Vorteil wäre daher für diesen Personenkreis eine Lager-Vorrichtung, also eine Vorrichtung, in der solche schweren Lasten nicht nur transportiert, sondern auch im Wohnbereich ordentlich untergebracht bzw. gelagert werden können.

Beim Verladen von Baby- oder Kinderwagen in Kraftfahrzeuge beschränken sich die bisher gemachten Vorschläge auf auseinandernehmbare Baby- oder Kinderwagen, deren Einzelteile (Transportbehälter für das Baby bzw. Kleinkind und Fahrgestellt) jedoch jedes für sich immer noch so sperrig und schwer waren, daß dies zu Problemen beim Verlagen und Transport führte.

Aufgabe der vorliegenden Erfindung war es daher, den Nachteilen des Standes der Technik im Zusammenhang mit dem Transport und der Lagerung schwerer Gegenstände/Waren abzuhelfen. Insbesondere war es Aufgabe der Erfindung, eine Transport-Vorrichtung für Waren zu schaffen, die es ermöglicht, Waren in Einkaufszentren oder Geschäften beim Einkauf bequem zu transportieren. Es war eine weitere Aufgabe der Erfindung, zu ermöglichen, die Transport-Vorrichtung mit den darin enthaltenen Waren in einfacher, selbst für alte und/oder behinderte Menschen bewältigbarer Weise in einem Fahrzeug zu verstauen, insbesondere ohne die Waren, speziell schwere Waren, umpacken zu müssen. Eine weitere Aufgabe der vorliegenden Erfindung war, die Vorrichtung (gegebenenfalls mit Waren, speziell mit schweren Waren) im Bereich der privaten Umgebung aus dem Fahrzeug ohne größeren Kraftaufwand wieder auszuladen und in den Bereich der privaten Umgebung zu verbringen. Es war eine weitere Aufgabe der vorliegenden Erfindung, gegebenenfalls die Transport-Vorrichtung für die Waren als Lager-Vorrichtung im Bereich der privaten Umgebung nutzen zu können. Es war eine weitere Aufgabe der Erfindung, eine Transport-Vorrichtung für Kleinkinder oder Babys bereitzustellen, die auch von schwächeren Menschen bequem und sicher in ein Fahrzeug verladen werden kann.

Überraschend wurde nun gefunden, daß man die vorstehend genannten - und noch weitere - Aufgaben in einfacher und insbesondere für ältere und/oder behinderte Menschen praktikabler Weise lösen kann durch die erfindungsgemäße Transport-/Lager-Vorrichtung für Gegenstände.

Die Erfindung betrifft eine Transport- und/oder Lager-Vorrichtung für Gegenstände, umfassend
- einen Behälter für das Aufnehmen von Gegenständen;
- an dem Behälter mindestens eine Einrichtung, die das Einbringen des Behälters in ein Fahrzeug und/oder das Anbringen des Behälters an einem Lagerort und/oder das Befestigen des Behälters an oder auf einem leicht bewegbaren Gestell erlaubt.

Bevorzugte Ausführungsformen ergeben sich aus den Unteransprüchen 2 bis 11.

Die Erfindung betrifft auch die Verwendung einer wie nachstehend beschriebenen Vorrichtung zum Transportieren schwerer Gegenstände.

Die Erfindung betrifft auch die Verwendung einer wie nachstehend beschriebenen Vorrichtung zum Lagern von Gegenständen.

Die Erfindung betrifft auch die Verwendung der Vorrichtung zum Transportieren sperriger Gegenstände oder auch die Verwendung einer wie nachstehend beschriebenen Vorrichtung zum Transportieren mindestens eines Babys oder Kleinkindes oder auch die Verwendung einer wie nachstehend beschriebenen Vorrichtung zum Transportieren mindestens eines Tiers.

Die Erfindung wird nachfolgend unter Bezugnahme auf die beigefügten Figuren näher beschrieben. Die Figuren betreffen bevorzugte Ausführungsformen der Erfindung und dienen deren Erläuterung. Sie können daher keinesfalls als die Erfindung beschränkend verstanden werden. Insbesondere sind die Figuren u. U. nicht maßstabsgerecht oder in korrekten relativen Proportionen der einzelnen Einrichtungen zueinander gezeichnet, um deren Anschaulichkeit nicht zu beeinträchtigen. Es zeigen:
Figur 1 eine perspektivische Ansicht einer beispielhaften Transport- und/oder Lagervorrichtung gemäß der Erfindung;
Figur 2 eine seitliche Ansicht einer beispielhaften Transport- und/oder Lagervorrichtung gemäß Figur 1;

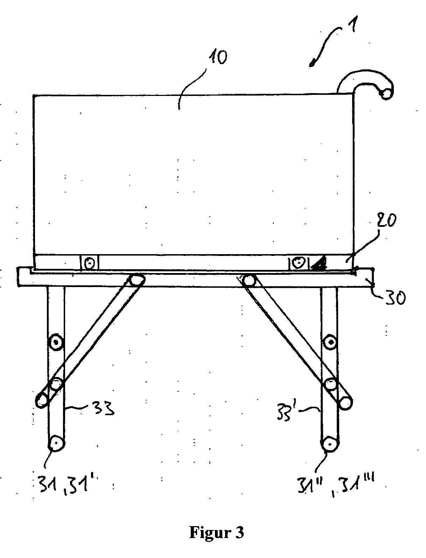

Figur 3 eine seitliche Ansicht einer beispielhaften Transport- und/oder Lager-Vorrichtung gemäß Figur 1, umfassend jedoch zusätzlich ein Gestell zum leichten bzw. bequemen Bewegen der Vorrichtung, wobei sich das Gestell in der Transport-Position befindet;
Figuren 4 a bis 4 c eine seitliche Ansicht einer beispielhaften Transport-und/oder Lager-Vorrichtung gemäß Figur 2, die während der Einbringens in ein Fahrzeug oder während des Anbringens an einem Lagerort an oder auf entsprechende Einrichtungen vor Ort geschoben wird, hier beispielsweise in ein Fahrzeug zum Transport der Vorrichtung;
Figuren 5 a bis 5 c eine seitliche Ansicht einer weiteren beispielhaften Tansport-und/oder Lager-Vorrichtung gemäß Figur 3 mit einem Gestell, das während der Einbringens in ein Fahrzeug oder während des Anbringens an einem Lagerort von einer Transport-Position in eine Lager-Position gebracht wird.

Die Erfindung wird nun unter Bezugnahme auf die Figuren anhand bevorzugter Ausführungsformen näher erläutert, ohne auf die bevorzugten Ausführungsformen beschränkt zu sein. Gleiche Bezugszeichen in verschiedenen Figuren werden für die gleichen Teile oder Einrichtungen der erfindungsgemäßen Vorrichtung verwendet.

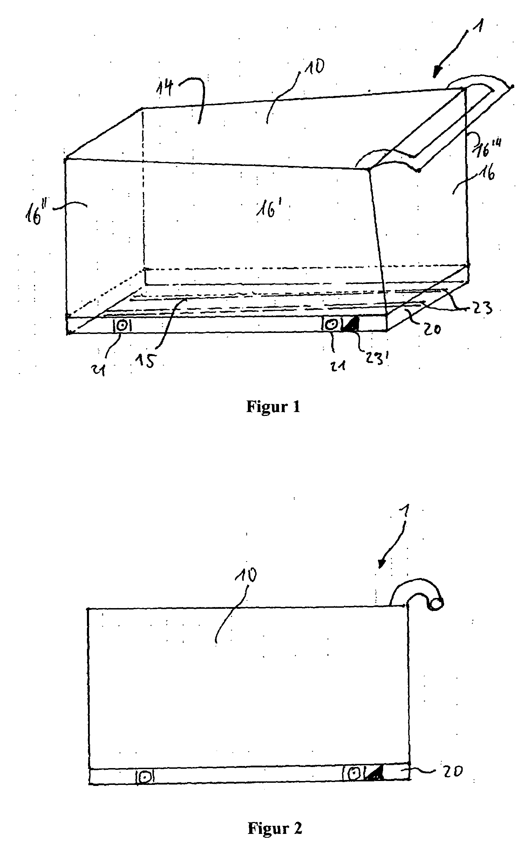

Figur 1 zeigt eine perspektivische Ansicht der erfindungsgemäßen Transport-und/oder Lager-Vorrichtung 1 für Gegenstände. Die zu transportierenden oder zu lagernden Gegenstände können beliebige Gegenstände sein, ohne daß die Erfindung diesbezüglich Beschränkungen auferlegt. Beispiele sind insbesondere schwere Gegenstände wie Kästen oder Gebinde mit mehreren Behältnissen für Getränke (Flaschen und andere Glasbehältnisse, Dosen, Kunststoffbehälter für beispielsweise Mineralwasser, Säfte, Wein, Bier, Sekt, Milch, Sahne) oder andere Lebensmittel (beispielsweise Obst, Gemüse, Marmelade) oder andere Gegenstände des täglichen Bedarfs, Kartons oder Gebinde für flüssige oder feste Materialien wie beispielsweise Waschpulver oder Reinigungsmittel, gefrorene Lebensmittel in größeren Gebinden, abgepackte oder lose Lebensmittel wie Fleisch, Gemüse oder Obst oder - wie typisch bei einem größeren Einkauf - eine Mischung der genannten Gegenstände, die in der Summe nicht nur eine beträchtliche Masse liefert, sondern sich auch zum Teil durch eine gewisse Sperrigkeit auszeichnet und daher gerade für ältere und/oder gebrechliche und/oder behinderte Menschen oder Menschen mit Problemen der Gesundheit der Rückens und/oder des Bewegungsapparates ein täglich neu zu lösendes und oft schwieriges Problem darstellt. Die Gegenstände können jedoch auch andere - beispielsweise sperrige - Gegenstände wie beispielsweise Sportgeräte (z. B. Golf-Equipment, Jagdgewehre, Surf-Ausrüstung, Segel-Ausrüstung, Angel-Zeug, Fecht-Ausrüstung o. ä.) sein. Weitere Ausführungsformen der Erfindung, wie sie nachfolgend im einzelnen beschrieben wird, betreffen den Transport mindestens eines Babys oder Kleinkindes. Weitere Ausführungsformen der Erfindung betreffen den Transport mindestens eines Tieres. Ohne die Erfindung zu beschränken, wird diese anhand des Problems des Transports eines üblichen (Kunststoff-) Kastens für Getränke (beispielsweise Mineralwasser oder Bier) weiter erläutert. Mehr oder weniger identische Probleme treten jedoch auch bei anderen Gegenständen, insbesondere schweren Gegenständen bzw. aufgrund ihrer Sperrigkeit schwierig zu hebenden Gegenständen auf.

Die erfindungsgemäße Transport- und/oder Lager-Vorrichtung 1 umfaßt mindestens einen Behälter 10 für das Aufnehmen von Gegenständen und an dem Behälter 10 mindestens eine Einrichtung 20, die das Einbringen des Behälters 10 in ein Fahrzeug und/oder das Anbringen des Behälters 10 an einem Lagerort und/oder das Befestigen des Behälters 10 an oder auf einem leicht bewegbaren Gestell erlaubt.

Der Begriff "Transport- und/oder Lager-Vorrichtung", wie er in der Beschreibung und in den Patentansprüchen verwendet wird, ist in der Weise zu verstehen, daß die Vorrichtung 1 nicht nur ausschließlich den Transport von Gegenständen erlaubt, sondern auch ausschließlich deren Lagerung in beliebiger Umgebung dienen kann. Darüber hinaus ist es möglich - und entspricht aufgrund der vielseitigeren Verwendung einer bevorzugten Ausführungsform der Erfindung - daß die Vorrichtung 1 zu gewissen Zeiten (beispielsweise während des Einkaufs von Gegenständen bzw. Waren) dem Transport der Gegenstände dient, während sie zu anderen Zeiten (beispielsweise nach dem Einkauf in der gewöhnlichen Wohn- und/oder Arbeitsumgebung des Benutzers) der Lagerung der eingekauften und/oder auch anderer Gegenstände dient. Es ist gerade ein Vorteil der erfindungsgemäßen Vorrichtung 1, daß sie - anders als ein üblicher Einkaufswagen oder eine Rolltasche gemäß dem Stand der Technik - vielseitig verwendbar ist.

Der als Teil der erfindungsgemäßen Transport- und/oder Lager-Vorrichtung 1 zu sehende Behälter 10 ist hinsichtlich seiner Form und des Materials, das zu seiner Herstellung verwendet wird, nicht beschränkt. Es können den Behälter 10 beispielsweise reguläre rechtwinklige Formen (Würfel, Quader) oder geringfügig von der Rechtwinkligkeit abweichende Formen kennzeichnen, wie sie für herkömmliche Einkaufswagen die Regel sind, die neben der praktischen Verwendbarkeit auch dem Erfordernis dienen müssen, daß sie in größeren Zahlen von ihnen ineinander einschiebbar ("stapelbar") sein müssen, um beim Abstellen Platz zu sparen. Denkbar sind jedoch auch andere (beispielsweise runde oder ovale oder elliptische Formen, ohne die Erfindung hierbei zu beschränken. Aufgrund besserer Unterbringbarkeit sowohl in einem Fahrzeug als auch an einem Lagerort sind rechtwinklige Formen oder an rechtwinklige Formen angenäherte Formen bevorzugt.

Der Behälter 10 kann aus einem Boden bzw. einer unteren Wand oder Unterfläche 15 und einer (z. B. bei runden oder ovalen Behältern 10 rundum verlaufenden) Seitenwand bzw. Seitenfläche oder Seite 16 oder mehreren (z. B. bei (gegebenenfalls annähernd) quaderförmigen Behältern 10 vier) Seitenwänden bzw. Seitenflächen oder Seiten 16, 16', 16", 16''' bestehen, ohne daß eine obere Wand bzw. eine Abdeckung oder ein Deckel vorgesehen ist. In einer alternativen, ebenfalls bevorzugten Ausführungsform der Erfindung kann der Behälter jedoch zusätzlich einen Deckel 14 aufweisen, insbesondere einen öffenbaren Deckel 14, der einteilig oder mehrteilig sein kann und entweder nur auf dem restlichen Behälter 10 aufliegt oder sicherbar und/oder verschließbar ist. Letzteres kann deswegen von Vorteil sein, weil bei Transport des Behälters 10 in einem Fahrzeug wie beispielsweise in einem Kraftfahrzeug (KFZ) eine Sicherung des Behälters 10 gegen Herausfallen von Gegenständen, beispielsweise im Fall eines Unfalls, wünschenswert ist bzw. als Sicherheitsmerkmal zwingend sein kann. Ein weiterer Vorteil des Vorhandenseins eines öffenbaren, jedoch auch mit dem Fachmann an sich bekannten Mitteln (Schloß, Blockiersplint, um nur zwei Möglichkeiten zu nennen) verschließbaren Deckels 14 auf dem Behälter 10 ist, daß dadurch beispielsweise ein Einkauf gegen Diebstahl gesichert werden kann, wenn der Benutzer noch weitere (anders geartete) Einkäufe zu tätigen hat, bei deren Erledigung er die erfindungsgemäße Vorrichtung nicht mitnehmen, sondern sie an sicherbarer Stelle abstellen will. Eine Sicherung des Behälters 10 kann auch bei dessen Verwendung zum Transport der vorstehend genannten Sportgeräte erwünscht, aus Sicherheits-Erwägungen (z. B. bei Gewehren) sogar zwingend sein. Der Deckel 14 kann aus demselben Material ausgebildet sein, aus dem auch der restliche Behälter 10 beschaffen ist; es ist jedoch auch möglich, daß der Deckel 14 aus einem völlig anderen Material besteht als der Rest des Behälters 10. Beispielsweise ist es denkbar, daß ein aus Draht (siehe nachfolgend) ausgebildeter Behälter 10 eine textile Abdeckung 14, beispielsweise eine wasserabweisende textile Abdeckung 14, noch weiter bevorzugt eine verschließbare und/oder sicherbare textile Abdeckung 14 aufweist. Die Vorteile einer solchen Lösung sind, daß beispielsweise eingekaufte Waren, aber auch andere Gegenstände (beispielsweise Gewehre) gegen von oben einfallenden Regen oder gegen Staub besser gesichert sind.

Hinsichtlich des Materials sind dem Behälter 10 ebenfalls keine Beschränkungen auferlegt. Das Material des Behälters kann ein üblicher, aus stabilem Draht bestehender Metallkorb 11 sein, der in besonderen Ausführungsformen die herkömmlichen Werte der Beständigkeit gegen Verformung aufweisen kann. Alternativ dazu kann der Behälter 10 ein aus üblichem Korb-Material herkömmlicher Stabilität gefertigter Korb 11 sein. Weitere denkbare beispielhafte Materialien des Behälters 10, die jede für sich Vorteile aufweisen, die bei der Verwendung gemäß der Erfindung zum Tragen kommen, sind Taschen 12 aus beliebigen, vorzugsweise aus herkömmlichen (beispielsweise) textilen und/oder polymeren Materialien, die möglicherweise auch ein verstärkendes Innengestell aufweisen können, um besser gegen Verformung geschützt zu sein, oder Kunststoff-Behälter 13, besonders bevorzugt formstabile Kunststoff-Behälter 13. Sowohl die Kunststoff-Behälter 13 als auch die Taschen 12, insbesondere solche Taschen, die aus einem polymeren Material bestehen oder mit einem solchen (zumindest teilweise) beschichtet sind, haben den Vorteil, daß sie wasserabweisend sind und damit das Transportgut gegen Feuchtigkeit, beispielsweise einfallenden Regen, schützen. Selbstverständlich sind erfindungsgemäß auch Material-Kombinationen denkbar, und zwar sowohl Material-Verbünde (für die die vorgenannten textilen Taschen 12 mit einer wasserabweisenden Polymer-Beschichtung ein mögliches, aber nicht beschränkendes Beispiel sind), als auch Material-Kombinationen wie beispielsweise ein aus formstabilem Draht gefertigter, korbartiger Behälter 11 mit einer Abdeckung 14 aus einem Polymer-Material oder aus einem Textil-Material oder aus einem mit einem Polymer beschichteten oder imprägnierten Textil-Material. Selbst Karton oder mit einer Polymer-Beschichtung und/oder Polymer-Imprägnierung wasserabweisend gemachter und/oder (gegebenenfalls beispielsweise mit einem partikulären oder faserartigen Polymer) verstärkter Karton sind für den Behälter grundsätzlich geeignet und können beispielsweise wegen des geringen Gewichts und/oder der Recyclisierbarkeit Vorteile gegenüber anderen Materialien aufweisen, sind jedoch aufgrund der geringen Stoßbeständigkeit in für den langfristigen Gebrauch gedachten Ausführungsformen der Erfindung weniger bevorzugt. Polymere für die vorgenannten Verstärkungs- und/oder Imprägnierungszwecke sind dem Fachmann auf diesem Gebiet zur Genüge bekannt, können im Hinblick auf den Gebrauchszweck in einfacher und zuverlässiger Weise vom Fachmann aufgrund seines Fachwissens ausgewählt werden und bedürfen daher an dieser Stelle keiner detaillierten Erläuterung.

Selbstverständlich fallen auch solche Transport-Vorrichtungen 1 unter die vorliegende Erfindung, in denen der Behälter 10 aufgrund der speziellen Anforderungen an das zu transportierende "Gut" besonderen Erfordernissen gerecht werden muß. So muß beispielsweise ein Behälter 10 für den Transport eines Babys oder Kindes bestimmten Sicherheitserfordernissen genügen und ist üblicherweise, wie dem Fachmann bekannt ist, auf der Innenseite entsprechend den Bedürfnissen eines Kleinkindes gepolstert. Besonders bevorzugt wird für Kinder auch ein Material verwendet, das sich abwaschen und/oder reinigen läßt und/oder das aus dem Behälter herausgelöst werden kann. Entsprechendes gilt auch für den Transport von Tieren; auch hier sind regelmäßig besondere Erfordernisse zu beachten, die der Fachmann kennt und die daher an dieser Stelle keiner weiteren detaillierten Erwähnung bedürfen.

Eine besonders bevorzugte Ausführungsform der Erfindung, die wegen ihrer denkbaren häufigen und vielseitigen Verwendung von besonderem Vorteil ist, betrifft einen Behälter 10 in Form eines Koffers 17, wie er zum Transport von Gegenständen beispielsweise auf Reisen häufig verwendet wird. Dieser Koffer 17 kann aus einem für Koffer üblichen Material (textiles Material, LederMaterial, Kunststoff-Material, Holz-Material, um nur einige bevorzugte Materialien zu nennen) bestehen. Der bevorzugte Behälter 10 in Form eines Koffers 17 ist - wie ein üblicher Koffer - im Innern zum Transportieren von Kleidung, Schuhwerk, persönlichen (z. B. Toiletten-) Utensilien usw. eingerichtet, weist jedoch auf seiner Außenseite mindestens eine erfindungsgemäß vorgesehene Einrichtung 20 auf, die das Einbringen des Koffer-Behälters 17 in ein Fahrzeug und/oder das Anbringen des Koffer-Behälters 17 an einem Lagerort und/oder das Befestigen des Koffer-Behälters 17 an oder auf einem leicht bewegbaren Gestell erlaubt.

Erfindungsgemäß weist der Behälter 10 mindestens eine Einrichtung 20 auf, die das Einbringen des Behälters 10 in ein Fahrzeug und/oder das Anbringen des Behälters 10 an einem Lagerort und/oder das Befestigen des Behälters 10 an oder auf einem leicht bewegbaren Gestell erlaubt. An diesem erfindungsgemäß wesentlichen Merkmal wird die Vielseitigkeit der erfindungsgemäßen Transport-und/oder Lager-Vorrichtung deutlich. Für eine solche Einrichtung 20 besteht gemäß der Erfindung keine Beschränkung, solange die Einrichtung 20 den vorgenannten Zwecken dienlich ist. Es kann sich bei der Einrichtung 20 um einfache, allein dem Einbringen in ein (Kraft-) Fahrzeug dienliche Einrichtungen 20 oder um technisch ausgereifte, auf spezielle Zwecke zugeschnittene Einrichtungen 20 handeln, wie sie nachfolgend im Detail an bevorzugten Beispielen erläutert werden. Gleiches gilt natürlich auch für den Zweck des Anbringens des Behälters 10 an einem Lagerort und/oder das Befestigen des Behälters 10 an oder auf einem leicht beweglichen Gestell.

In bevorzugten Ausführungsformen der Erfindung ist die mindestens eine Einrichtung 20, weiter bevorzugt sind mehrere zusammen wirkende Einrichtungen 20, an der Unterfläche 15 des Behälters 10 und/oder an mindestens einer der Seiten 16, 16', 16", 16''' des Behälters 10 angebracht. Im Hinblick auf die einen Transport des Behälters erleichternden Funktionen ist die Anbringung einer oder mehrerer Einrichtungen an der Unterfläche 15 des Behälters bevorzugt. Besonders bevorzugt zur Anbringung an der Unterfläche 15 des Behälters sind solche Einrichtungen 20, die dem Bewegen des Behälters auf einem dafür geeigneten Untergrund (beispielsweise auf dem Kofferraum-Boden eines KFZ oder an einem Lagerort in der heimischen Umgebung zur Entnahme von Gegenständen aus dem Behälter 10) dienen. Denkbar ist jedoch auch die Anbringung von Einrichtungen 20 an mindestens einer der Seitenwände 16, 16', 16", 16''', vorzugsweise an genau einer der Seitenwände 16. Dies ist beispielsweise der Fall bei einem als Koffer 17 ausgebildeten Behälter der Fall. Dieser kann an einer seiner Seitenwände 16, 16', 16", 16''' Rollen oder Räder zum einfacheren Bewegen auf einem glatten Untergrund und/oder Einrichtungen zum Befestigen des Koffers 17 auf einem speziell für den Rolltransport vorgesehenen Gestell und/oder (vorzugsweise, aber nicht zwingend, auf einer Seite des Koffers 17, die derjenigen mit den Rollen/Rädern gegenüberliegt) Handgriffe zum leichten Ergreifen und/oder Heben und/oder Schieben und/oder Ziehen des Koffers 17 aufweisen. Selbstverständlich sind auch mehrere Einrichtungen 20 auf mehreren Seiten (einschließlich der Unterseite 15) des Behälters 10 oder eine einzige Einrichtung 20 möglich, die sich über mehrere Seiten (einschließlich der Unterseite 15) des Behälters 10 erstreckt

In bevorzugten Ausführungsformen der Erfindung sind mehrere Einrichtungen 20 an der Unterfläche 15 des Behälters 10 und/oder an mindestens einer der Seiten 16, 16', 16", 16''' des Behälters 10 angebracht. So können verschiedene Einrichtungen 20 an verschiedenen Flächen des Behälters 10 kombiniert werden, beispielsweise ein oder mehrere Handgriff(e) zum Schieben und/oder Ziehen (z. B. Handgriffe des Koffers 17) in Kombination mit Einrichtungen zum Bewegen/Schieben/Gleiten an der Unterseite 15 des Behälters 10; oder Handgriffe zum Schieben und/oder Ziehen (z. B. ein oder mehrere Handgriff(e) eines Einkaufswagens) in Kombination mit einer Einrichtung 20 zum Befestigen des Behälters 10 an der Unterseite 15 auf einem leicht bewegbaren Gestell 30; oder Einrichtungen zum Bewegen/Schieben/Gleiten an der Unterseite des Behälters 10 mit Einrichtungen zum Sichern und/oder Verankern gegen ein Verrutschen an einer oder mehreren der Seiten 16, 16', 16", 16''' des Behälters 10. Der Gestaltung solcher Vorrichtungen sind durch die Erfindung keine Grenzen gesetzt.

Beispielsweise kann die Einrichtung 20 mindestens eine an der Unterseite 15 des Behälters 10 angebrachte Kunststoff-Schiene oder Metallschiene 23 oder Holzschiene sein. Vorzugsweise werden zwei derartige Schienen 23 verwendet, die auch aus unterschiedlichen Materialien ausgebildet sein können, aber nicht müssen. Diese Schiene(n) 23 erstreckt/erstrecken sich weiter bevorzugt über einen wesentlichen Teil, wenn nicht gar die ganze Unterfläche 15 des Behälters 10 und ist/sind weiter bevorzugt an der Unterfläche 15 fest angeordnet. Bei mehreren Schienen 23 sind diese parallel angeordnet, um ein bequemes Gleiten des (gegebenenfalls voll beladenen) Behälters 10 bei Aufgeben mechanischer Kräfte auf den Behälter 10 zu ermöglichen. Es ist jedoch auch denkbar, mehrere Schienen 23 so anzuordnen, daß sie bei Bewegen zum Einschieben des Behälters 10 in eine Ruheposition parallel sind (leichtes Gleiten), jedoch in der Ruheposition in eine nicht parallele Stellung gebracht werden können, damit der Behälter 10 danach nur schwer oder (in voll beladenem Zustand gar nicht) mehr bewegt werden kann und so eine gewisse Sicherung des Behälters 10 gegen unerwünschtes Verschieben erreicht wird. Die Oberfläche einer solchen Schiene 23 ist in einer bevorzugten Ausführungsform glatt ausgebildet (beispielsweise bei Metallen glatt poliert), so daß es ermöglicht wird, daß der Behälter 10 - selbst in einem mit Gegenständen teilweise oder voll beladenen Zustand - auf dem textilen oder Kunststoff- oder Leder-Untergrund eine KFZ-Kofferraums gleiten oder relativ reibungsarm rutschen kann, wenn er mit Körperkraft auf dem/auf den Untergrund gezogen oder geschoben wird.

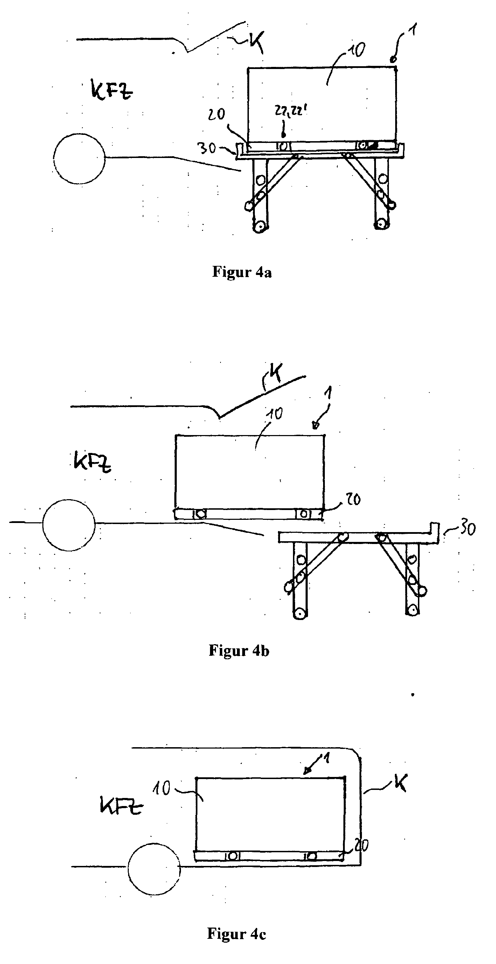

In weiteren, aufgrund des Zusatznutzens bevorzugten, jedoch apparativ aufwendiger zu realisierenden Ausführungsformen der Erfindung stellt die Erfindung eine Transport- und/oder Lager-Vorrichtung 1 gemäß der obigen Beschreibung bereit, in der die mindestens eine Einrichtung 20 einen Läufer 21 zum Bewegen des Behälters 10 in ein Fahrzeug aufweist. Eine Vorrichtung 1 mit einer Einrichtung 20, die einen solchen Läufer 21 aufweist, kann mit dessen Hilfe bequem und leicht in ein Fahrzeug, insbesondere in ein KFZ, eingeladen werden, selbst wenn sie voll und/oder mit schweren und/oder sperrigen Gegenständen beladen ist. Dies wird nachfolgend anhand der Figuren 4a bis 4c im Detail erläutert.

Der Behälter 10 der erfindungsgemäßen Vorrichtung umfaßt in dieser bevorzugten Ausführungsform mindestens eine Einrichtung 20 mit einem Läufer 21 zum Bewegen des Behälters 10 in ein Fahrzeug hinein. Der Läufer 21 ist in bevorzugten Ausführungsformen der Erfindung an der Unterfläche 15 des Behälters 10 angebracht, um gegebenenfalls mit der Fläche, auf der der Behälter untergebracht oder gelagert werden soll, in - Kraft einsparende - Wechselwirkung treten zu können. Entsprechend einer weiter bevorzugten Ausführungsform der Erfindung umfaßt der Läufer 21 mindestens zwei Rollen 22, 22', noch mehr bevorzugt zwei bis mindestens vier Rollen 22, 22', 22", 22''', zum Einschieben des Behälters (10) in ein Fahrzeug. Diese Rollen 22, 22' ... dienen dazu, den Behälter 10 beim Einladen in ein Fahrzeug, beispielsweise in ein KFZ, in besonders bevorzugten Ausführungsformen der Erfindung über eine Kofferraum-Klappe K, bequem in den Kofferraum schieben zu können. Dazu sind in der allgemeineren Ausführungsform zwei Rollen (oder alternativ zwei Räder) an der Unterfläche des Behälters 10 auf der Seite angebracht, die von der Rückseite bzw. rückseitigen Kofferraum-Klappe K des KFZ her in Richtung auf die Vorderseite des KFZ zuerst in das Fahrzeug hineingeschoben wird, während die andere Seite des Behälters 10 noch nicht im Fahrzeug ist, sondern vom Nutzer gehalten wird. Es ist jedoch in einer weiteren bevorzugten Ausführungsform der Erfindung auch möglich, daß der Läufer 21 vier Rollen 22, 22', 22", 22''' (oder alternativ vier Räder) aufweist. Die beiden in Laufrichtung vorderen Rollen (oder Räder) berühren die Kofferraum-Fläche zuerst und ermöglichen bereits ein Rollen des Behälters 10 auf der Fläche; die beiden anderen Rollen (oder Räder) berühren die Kofferraum-Fläche erst nach weiterem Einschieben des Behälters 10, erleichtern jedoch dann das vollständige Einschieben des Behälters 10 in den Kofferraum.

Es entspricht einer weiteren, noch mehr bevorzugten Ausführungsform der Erfindung, daß die Vorrichtung 1 einen Behälter mit einem Läufer 21 mit vier Rollen 22, 22', 22", 22''' (oder alternativ vier Rädern) zum Einschieben des Behälters 10 auf gesondert daran angepaßten Einrichtungen in einem Fahrzeug aufweist, die in einer noch weiter bevorzugten Ausführungsform auch zusätzlich zum Verankern des Behälters 10 in einem Fahrzeug dienen können. Die bei dieser Ausführungsform in dem Fahrzeug bauseitig vorhandenen oder nachträglich eingebauten Einrichtungen können beispielsweise zwei Schienen sein, die auf dem Kofferraum-Boden das Fahrzeugs (KFZ) befestigt oder in diesen Boden eingelassen sind und so angeordnet sind, daß die Rollen oder Räder auf der Unterfläche 15 des Behälters 10 in diese eingreifen können und in bzw. auf diesen einfach laufen können. In einer noch weiter bevorzugten, weil Beschädigungen des Lacks des KFZ vermeidenden Ausführungsform können diese Schienen über den hinteren Kofferraum-Rand des KFZ hinaus nach hinten herausgezogen (verlängert) werden, so daß zumindest zwei der Rollen 22, 22' (oder die beiden einzigen Rollen 22, 22') auf den Schienen aufgesetzt werden können und damit das Einschieben des Behälters in das KFZ weiter erleichtert wird, ohne daß der Behälter 10 mit der Außenfläche des Fahrzeugs bzw. KFZs in Berührung kommt. Dies ist angedeutet in Figur 4 a und Figur 4 b gezeigt. Beim weiteren Einschieben des Behälters 10 können die gegebenenfalls vorhandenen weiteren Rollen 22", 22''' ebenfalls in die Schienen eingreifen und in bzw. auf diesen einfach laufen. Sobald der Behälter in der gewünschten Position steht, werden die vorher herausgezogenen Teile der Laufschienen wieder eingefahren, was nicht nur ermöglicht, daß der Kofferraum geschlossen werden kann (Figur 4c), sondern auch dazu beitragen kann oder allein dazu dienen kann, den Behälter gegen ein Verschieben oder Verrutschen zu sichern. Gegebenenfalls können alternative dazu oder gemeinsam damit auch andere Mittel zur Sicherung des Behälters eingesetzt werden, beispielsweise an der Unterfläche 15 des Behälters 10 oder an einer anderen Fläche, beispielsweise einer Seitenfläche 16, 16' ..., angebrachte oder im Bereich der Lagerung der Rollen 22, 22', ..., bzw. Räder angebrachte Sicherungsmittel. Dies kann beispielsweise ein Feststeller oder eine Bremse für die Rollen 22, 22', ..., ein oder mehrere Stopper 23' in bzw. auf den Schienen, oder eine eine stabile Verbindung zwischen dem Behälter 10 und dem KFZ-Innenraum herstellende Einrichtung umfassen.

Die vorstehend beschriebene Einheit aus Behälter 10, Einrichtung 20 und an die Einrichtung 20 angepaßten Einrichtungen in einem Transport-Fahrzeug, beispielsweise im Privat-KFZ eines Nutzers, kann gegebenenfalls in vorteilhafter Weise auch automatisch bedienbar ausgestaltet werden. Dazu kann beispielsweise der Nutzer bei der Annäherung an das KFZ mit der Vorrichtung 1 mit der Fernbedienung für sein KFZ die Kofferraum-Klappe bereits aus einer gewissen Entfernung öffnen und gleichzeitig anfordern, daß die Schiene(n) für das Einladen des Behälters 10 ausgefahren wird/werden. Die Einrichtungen 20 an der Unterfläche 15 des Behälters 10, beispielsweise die Rollen 22, 22' des Läufers 21, werden an die ausgefahrene(n) Schiene(n) bewegt und mit dieser/ diesen in Eingriff gebracht. Die Berührung kann das automatische Einziehen des ersten (in Fahrtrichtung vorderseitigen) Rollenpaares 22, 22' auf der/den Schiene(n) initiieren; dies kann jedoch auch durch Betätigen separater Kommando-Einrichtungen am Fahrzeug oder an der Vorrichtung 1 geschehen. Der Behälter wird automatisch auf der/den Schiene(n) in das KFZ gezogen bzw. geschoben, bis auch das zweite Rollenpaar 22", 22''' mit der Schiene/den Schienen im Eingriff ist. Sobald der Vorgang des Ladens abgeschlossen ist, werden die herausgefahrenen Teile der Schienen eingezogen und der Behälter mit der Einrichtung 20 gesichert. Gegebenenfalls kann die Kofferraum-Klappe automatisch wieder geschlossen werden.

Gemäß der Erfindung ist es weiter bevorzugt, daß die Transport- und/oder Lager-Vorrichtung 1 zusätzlich zu dem Behälter 10 und der Einrichtung 20, die das Einbringen des Behälters 10 in ein Fahrzeug ermöglicht, ein leicht bewegbares Gestell 30 aufweist, das gegebenenfalls lösbar an der Einrichtung 20 und/oder dem Behälter 10 angebracht ist. Das Gestell 30 kann damit entweder (gemäß einer Ausführungsform) fest mit dem Behälter 10 und/oder der Einrichtung 20 verbunden sein und damit dauerhaft an dieser befestigt sein. In einer anderen Ausführungsform sind Behälter 10 und Einrichtung 20 einerseits und Gestell 30 andererseits zwei getrennte und getrennt bereitstellbare Einheiten, die je nach Gegebenheit und Einsatzort miteinander funktionell verbunden, aber auch bei Bedarf jederzeit wieder voneinander gelöst werden können. Dies hat erfindungsgemäß mehrere Vorteile: Zum einen wird durch die lösbare Verbindung eine größere Flexibilität gegeben: Beide Einheiten sind unabhängig voneinander nutzbar, beispielsweise in Altersheimen, für die nicht die Bereitstellung eines Gestells 30 pro Vorrichtung 1 erforderlich ist, sondern die Bereitstellung einer kleineren Anzahl von Gestellen 30 zur Benutzung in Kombination mit mehreren Vorrichtungen 1 ausreicht. Zum anderen erfordert die Unterbringung der von dem Gestell 30 getrennten Transport- und/oder Lager-Vorrichtung 1 weniger Platz und ist daher mit der - mitunter engen - Wohn- und/oder Arbeitsumgebung des Nutzers besser kompatibel. Vorteile bringt jedoch auch die Kombination beider Teile, also Vorrichtung mit Behälter 10 und Einrichtung 20 einerseits und Gestell 30 andererseits. Dadurch ist nämlich die Vorrichtung 1 an jeder Stelle und jederzeit bequem bewegbar, ohne auf fremde Hilfe angewiesen zu sein, und kann so auch von gebrechlichen und/oder behinderten Menschen oder Menschen mit gesundheitlichen Problemen, insbesondere des Bewegungsapparats, jederzeit benutzt werden.

Das an der erfindungsgemäßen Transport- und/oder Lager-Vorrichtung 1 gegebenenfalls lösbar befestigbare Gestell 30 ist in einer bevorzugten Ausführungsform ein fahrbares Gestell 30, das über eine ausreichende Anzahl von Einrichtungen verfügt, die ein leicht-gängiges Fahren der Vorrichtung 1 ermöglichen. Beispiele für solche Einrichtungen sind dem Fachmann bekannt. Dies können beispielsweise Räder 31 sein, die in ausreichender Zahl, mindestens drei Räder 31, 31', 31", vorzugsweise aus Stabilitätsgründen vier Räder 31, 31', 31 ", 31''', an dem Gestell 30 vorhanden sind. Um in einer weiteren bevorzugten Ausführungsform der Einheit leichte Lenkbarkeit zu verleihen, sind mindestens zwei der Räder 31, 31 31", 31''' des Gestells 30 lenkbar. Unter "lenkbar" wird im Rahmen der vorliegenden Beschreibung und in den Patentansprüchen verstanden, daß die Räder in einer senkrecht zur Bewegungsebene verlaufenden Achse so gelagert sind, daß beim Vorwärts-Bewegen eine Richtungsänderung der aus Behälter 10, Einrichtung 20 und Gestell 30 bestehenden Vorrichtung 1 ohne großen Kraftaufwand dadurch möglich wird, daß die Räder bzw. Rollen paarweise einschlagen. Im Sinne einer optimalen Vorwärts-Bewegung besteht eine besonders bevorzugte Ausführungsform der Erfindung darin, daß alle Rollen bzw. Räder 31, 31', 31", 31''', besonders bevorzugt alle 4 Rollen bzw. Räder 31, 31 ', 31", 31''', des Gestells 30 getrennt bzw. unabhängig voneinander ausrichtbar bzw. "lenkbar" sind.

In eines besonders bevorzugten Ausführungsform der Erfindung ist das Gestell 30 mit einem Motor versehen, beispielsweise einem 2 Räder (eine Achse) antreibenden Motor. Hinsichtlich des Auswahl des Motors hat der Fachmann eine ganze Reihe an sich bekannter Ausführungsformen zur Verfügung, von denen beispielhaft ein Elektromotor genannt ist. Dieser kann vorzugsweise mit einer an dem Gestell befestigbaren (wiederaufladbaren) Batterie mit Energie für den Antrieb versorgt und mit einer (vorzugsweise stufenlosen) Steuerung des Antriebs gesteuert werden; selbstverständlich ist ein solcher Antriebsmotor jedoch nicht auf einen Elektromotor beschränkt. Ein Elektromotor ist jedoch aufgrund seiner Umweltfreundlichkeit und geringen Lautstärke besonders bevorzugt.

Eine noch weiter bevorzugte, weil den Transport-Vorgang von Gegenständen weiter erleichternde Transport- und/oder Lager-Vorrichtung 1 gemäß der Erfindung umfaßt ein Gestell 30, das nicht nur lenkbar fahrbar ist, sondern auch hinsichtlich seiner Höhe adjustierbar ist. Dies wird erfindungsgemäß so verstanden, daß die Entfernung zwischen der Unterfläche 15 des Behälters 10, der - zumindest vorübergehend und gegebenenfalls über die Einrichtung 20 - mit dem Gestell 30 verbunden ist, und den auf dem Untergrund bzw. Boden laufenden Rollen bzw. Rädern 31, 31 31", 31''' variabel ist und den jeweiligen Gegebenheiten einfach angepaßt werden kann. Besonders bevorzugt kann eine solche Adjustierbarkeit in einer besonders bevorzugten Ausführungsform der Erfindung mittels des (oben bereits für den Antrieb vorgeschlagenen) Elektromotors erreicht werden. Es ist jedoch auch eine mechanische Einrichtung zum Adjustieren denkbar, beispielsweise eine Kurbel mit einem entsprechenden Gestänge. Die Adjustierbarkeit kann beispielsweise von großem Vorteil beim automatischen Einladen der Vorrichtung in ein Fahrzeug bzw. KFZ sein: Die das Gestell 30 umfassende Vorrichtung 1 wird mit dem Behälter 10 und den an dessen Unterfläche 15 angebrachten Rollen 21, 21' an die (bereits ausgefahrenen) Schienen herangefahren und dabei die Höhe über das adjustierbare Gestell 30 so eingestellt, daß die Rollen 21, 21' genau in Höhe der Schienen sind und in diese eingreifen können. Dann wird das Gestell 30 von der Einrichtung 20 bzw. dem Behälter 10 gelöst, und der Behälter 10 kann auf der/den Schiene(n) - wie oben beschrieben - in das Fahrzeug bzw. KFZ verladen und gesichert werden. In umgekehrter Reihenfolge wird der Behälter 10 über die aus-gefahrere(n) Schiene(n) aus dem Fahrzeug bzw. KFZ ausgeladen und auf das bereitstehende, in der Höhe exakt adjustierte Gestell 30 geschoben, wo er befestigt bzw. gesichert wird. Damit wird die Vorrichtung 1 wieder getrennt vom Fahrzeug bzw. KFZ bewegbar.

In einer weiteren, erfindungsgemäß ebenfalls mit Vorteil verwendbaren und damit auch bevorzugten Ausführungsform ist das Gestell 30 fest mit der Vorrichtung 1 verbunden, und zwar entweder über die Einrichtung 20 oder direkt an dem Behälter 10. Auch in diesem Fall ist weiter bevorzugt das Gestell 30 höhen-adjustierbar, wie dies vorstehend beschrieben wurde. Damit bei dieser bevorzugten Ausführungsform der Erfindung das fest an der Vorrichtung 1 befestigte Gestell 30 mit dem Behälter 10 verladen (oder bei Lagerung verstaut) werden kann, wird gemäß der Erfindung vorgeschlagen, daß das Gestell 30 mindestens drei Rollen 31, 31', 31" oder Räder, vorzugsweise (beispielsweise aus Stabilitätsgründen) vier Rollen 31, 31', 31", 31''' oder Räder, aufweist. Die vorzugsweise vier Räder 31, 31 ', 31", 31''' sind an getrennten Achsen 32 des Gestells 30 angeordnet, wobei alle Räder über je eine getrennte Achse 32 verfügen, und zwar sowohl über je eine getrennte Radachse als auch eine getrennte Achse, um die sich das Rad zum Lenken der Vorrichtung drehen kann (angeordnet senkrecht zur Fläche, auf der das Rad läuft). Jeweils zwei Räder 31, 31' ' bzw. 31 " und 31''' sind in der Weise einem Fuß 33, 33' des Gestells 30 zugeordnet, daß zwei (in Bewegungsrichtung der erfindungsgemäßen Transport- und/oder Lager-Vorrichtung 1) vordere Räder 31, 31' an einem vorderen Fuß 33 des Gestells 30 angeordnet sind und zwei (in Bewegungsrichtung der erfindungsgemäßen Transport- und/oder Lager-Vorrichtung 1) hintere Räder 31 ", 31''' an einem hinteren Fuß 33' des Gestells 30 angeordnet sind. Jeder der beiden Füße 33, 33' des Gestells weist - neben den für die Höhen-Adjustierung erforderlichen Einheiten auch Einheiten 34 auf, mit denen die Füße 33, 33' des Gestells 30 getrennt voneinander und gegebenenfalls auch gegenläufig zueinander von einer Transport-Position T in eine Lager-Position L oder umgekehrt von einer Lager-Position L in eine Transport-Position T verschwenkt werden können. Dabei ist die Transport-Position T jede Position, die ein Transportieren des Behälters 10 auf beliebiger Höhe (Abstand von der Fläche, auf der die Vorrichtung 1 steht oder bewegt wird) erlaubt. Die Lager-Position L ist demgegenüber jede Position, die ein Lagern des Behälters an einem Lagerort oder ein Ruhen des Behälters 10 bei Transport in einem Fahrzeug bzw. KFZ erlaubt, bei dem das fahrbare Gestell 30 nicht zum Bewegen des Behälters 10 benötigt wird.

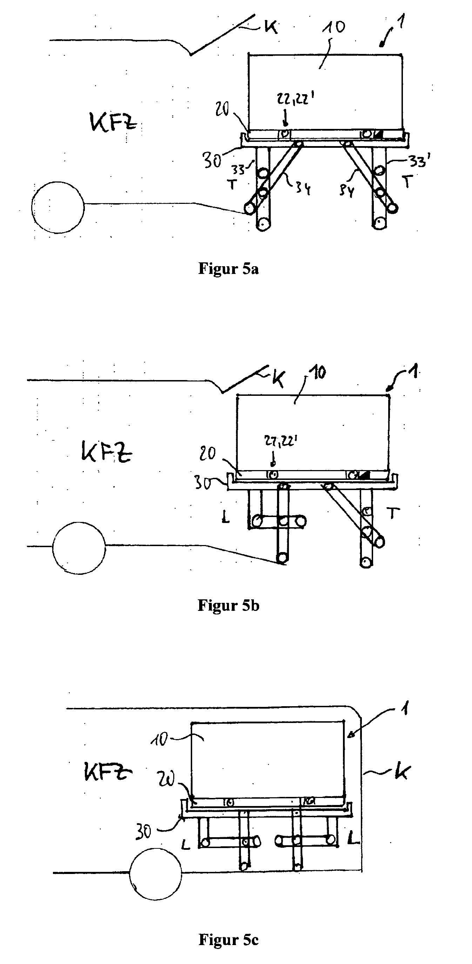

Erfindungsgemäß kann - wie in Figur 5 gezeigt - der Übergang der Füße 33, 33' des Gestells 30 von der Transport-Position T in die Lager-Position L dadurch bewirkt werden, daß man die Transport- und/oder Lager-Vorrichtung 1 mittels des daran befestigten Gestells 30 in die Nähe eines zum Transport bestimmten Fahrzeugs, beispielsweise eines KFZ, bewegt. Die Höhe des Behälters 10 im Verhältnis zu den Einrichtungen im Fahrzeug, beispielsweise zu der/den Schiene(n), die das Einladen erleichtern soll(en), wird durch Adjustieren des Gestells 30 angepaßt. Sobald die (in Fahrtrichtung des Fahrzeugs bzw. Belade-Richtung des Behälters 10) vorderen Rollen 31, 31' am Gestell 30 den Punkt erreicht haben, an dem sie in die Schiene(n) eingreifen, wird der (in Fahrtrichtung des Fahrzeugs bzw. Belade-Richtung des Behälters 10) vordere Fuß 33 des Gestells 30 von der Transport-Position T in die Lager-Position L geschwenkt (und verliert dabei den Kontakt zur Fläche (z. B. zum Boden), auf dem er vorher noch stand bzw. bewegt wurde. Der andere Fuß 33' mit den Rollen 31" bzw. 31''' bzw. den beiden hinteren Rädern bleibt weiter mit der Fläche bzw. dem Boden in Kontakt, um das Einladen bzw. Einziehen des Behälters 10 (durch Körperkraft des Benutzers oder durch Betätigen der Automatik) zu unterstützen. Erst mit dem oder kurz nach dem Moment, zu dem die (in Fahrtrichtung des Fahrzeugs bzw. Belade-Richtung des Behälters 10) hinteren Rollen 31", 31''' an dem Gestell 30 den Punkt erreicht haben, an dem sie ebenfalls in die Schiene(n) eingreifen, wird der (in Fahrtrichtung des Fahrzeugs bzw. Belade-Richtung des Behälters 10) hintere Fuß 33 des Gestells 30 ebenfalls von der Transport-Position T in die Lager-Position L geschwenkt (und kann dann ebenfalls den Kontakt zur Fläche (z. B. zum Boden), auf dem er vorher noch stand bzw. bewegt wurde, verlieren). Der Behälter wird dann auf den auf der/den Schiene(n) laufenden Rollen 31, 31 31", 31''' bzw. Rädern im Fahrzeug (KFZ) in die Ruhe-Position geschoben oder (automatisch) gezogen und dort gesichert.

Beim Ausladen des Behälters 10 aus dem Fahrzeug (KFZ) wird genau in umgekehrter Reihenfolge der Schritte vorgegangen wie beim Beladen: Der Behälter 10 wird entsichert. Die Schiene(n) wird/werden (gegebenenfalls automatisch) ausgefahren, und der Behälter 10 wird auf den Rollen 31, 31', 31", 31''', die auf bzw. in der/den Schiene(n) laufen, gegebenenfalls automatisch aus dem Fahrzeug bewegt oder manuell gezogen. Bevor die (beim Entladevorgang voranlaufenden) hinteren Rollen 31 ", 31''' des Gestells 30 das Ende der Schiene(n) erreichen, auf bzw. in denen sie laufen, wird der (beim Entladevorgang voranlaufende) hintere Fuß 33' aus der Lager-Position L in die Transport-Position P geschwenkt, so daß die Räder 31 ", 31''' den Boden bzw. die Fläche berühren, auf der die Räder des Gestells 30 später laufen sollen. Beim weiteren Entladen, also kurz bevor die (beim Entladevorgang hinterherlaufenden) vorderen Rollen 31, 31' das Ende der Schiene(n) erreichen, auf bzw. in denen sie laufen, wird der (beim Entladevorgang hinterherlaufende) vordere Fuß 33 aus der Lager-Position L in die Transport-Position P geschwenkt, so daß die Räder 31, 31' den Boden bzw. die Fläche berühren, auf der die Räder des Gestells 30 später laufen sollen. Sobald alle vier Räder 31, 31', 31", 31''' wieder stabil auf dem Boden stehen, kann der Behälter 10 der erfindungsgemäßen Transport-und/oder Lagervorrichtung wieder leicht und bequem mit Hilfe des Gestells 30 und gegebenenfalls mit Hilfe eines (Elektro-) Motors mit Steuerung bewegt bzw. gefahren werden. Die herausgezogene(n) Schiene(n) wird/werden (gegebenenfalls automatisch) wieder eingefahren und das Fahrzeug bzw. die Kofferraum-Klappe des KFZ kann geschlossen werden.

Vorstehend wurden mehrere Ausführungsformen der Erfindung beschrieben, in denen das Gestell 30 Höhen-adjustierbar ist. Eine solche Einstellbarkeit des Gestells 30 kann stufenlos sein, was wegen der Exaktheit der HöhenEinstellung des Gestells 30 bevorzugt ist, oder kann in Stufen abgestuft sein, was technisch einfacher zu verwirklichen ist. In gleicher Weise wurde oben beschrieben, daß die Füße 33, 33' des Gestells beim Lagern und/oder Transport, beispielsweise in einem KFZ, zwischen der Unterfläche 16 des Behälters 10 und der Fläche, auf der die erfindungsgemäße Transport- und/oder Lager-Vorrichtung 1 transportiert und/oder gelagert wird, in raumsparender, beispielsweise zusammengeklappter Form untergebracht und verstaut werden kann. Dem Fachmann sind zur Einstellbarkeit der Höhe von fahrbaren Vorrichtungen und zum Einklappen des Fahrgestells bzw. der Füße 33, 33' zahlreiche Lösungen bekannt, von denen die vorliegende Beschreibung nur jeweils eine beispielhafte und nicht beschränkende (und in den Figuren nur vom Prinzip und nicht von der detaillierten technischen Lösung her dargestellte) Lösung zeigt. So lassen sich beispielsweise - in einem von der vorliegenden Erfindung nicht berührten Gebiet - Krankentragen im Hinblick auf Ihren Abstand zum Boden oder ihre Höhe im Vergleich zu einem benachbarten Behandlungstisch oder Operationstisch (Problem des "Umladens" eines Patienten von der mobilen Krankentrage auf den immobilen Behandlungs- bzw. Operationstisch über eine möglichst geringe Höhendifferenz bzw. Entfernung) in Stufen oder stufenlos einstellen oder beim Einladen in einen Krankenwagen so "zusammenlegen", daß das Gestell zum Schieben oder Ziehen der Krankentrage raumsparend, beispielsweise zusammengeklappt, zwischen der Transportfläche und der Liegefläche untergebracht werden kann. Auch im Fall einer Krankentrage lassen sich zum Einschieben in einen Krankenwagen die Füße nacheinander verstauen. Diesbezügliche Technologien werden im Stand der Technik in einer ganzen Reihe von Dokumenten beschrieben und sind daher dem Fachmann auf diesem Gebiet geläufig, so daß sich eine detaillierte technische Beschreibung erübrigt.

Wie oben bereits beschrieben, kann die erfindungsgemäße Transport- und/oder Lager-Vorrichtung 1 auch dazu verwendet werden, Gegenstände, die mit ihrer Hilfe herantransportiert wurden, beispielsweise im Bereich der geschäftlichen oder privaten Umgebung des Benutzers nicht nur zu entladen, sondern auch (gegebenenfalls auch ohne Entladen) zu lagern. Dazu kann in der Weise vorgegangen werden, daß die Vorrichtung 1, bestehend aus dem Behälter 10 und der Einrichtung 20 und dem Gestell 30, in den Bereich der geschäftlichen oder privaten Umgebung (beispielsweise das Büro oder die Wohnung) des Nutzers gefahren wird. Die Vorrichtung 1 kann dann mittels Einrichtungen zum Sichern (beispielsweise einem Stopper an den Rädern 31, 31 , 31" und/oder 31''' oder einer Sicherungseinrichtung am Behälter 10) gegen Davonrollen oder unbeabsichtigtes Anstoßen und dadurch In-Bewegung-Setzen des auf dem Gestell 30 befindlichen Behälters 10 gesichert werden.

In einer anderen bevorzugten Ausführungsform der Erfindung ist die Transport-und/oder Lager-Vorrichtung 1 zum Lagern der Gegenstände nur in einer aus Behälter 10 und Einrichtung 20 bestehenden Anordnung vorgesehen. Dazu ist - in einer den Einrichtungen zum Transport in einem KFZ vergleichbarer Weise - ein Lagerort vorzusehen, der es erlaubt, den Behälter 10 mit Inhalt ohne das Gestell 30 zu lagern. Hierzu kann der Fachmann eine große Zahl von Möglichkeiten in Betracht ziehen. Aus Gründen der Vereinfachung und Vereinheitlichung des Systems kann jedoch der Lagerort - wie das KFZ in Figur 4 a bis Figur 4 c für den vergleichbaren Fall - Einrichtungen aufweisen, beispielsweise eine oder mehrere Schienen, die herausgefahren und mit den an dem Behälter 10 bzw. der Einrichtung 20 angeordneten Rollen 22, 22', 22", 22''' bzw. entsprechenden Rädern zum Eingriff gebracht werden können, um den Behälter 10 darauf zu verschieben bzw. in einer Ruhe-Position zu sichern. Dies kann natürlich in der dem Beladen des KFZ vergleichbaren Weise auch derart geschehen, daß das Gestell 30 zusammen mit dem Behälter 10 und der Einrichtung 20 gelagert wird. Sobald die Notwendigkeit besteht, den Behälter 10 der Vorrichtung 1 wieder (beispielsweise für neue Transport-Aufgaben) zu bewegen, wird - in der dem Entladen des KFZ analogen Weise vorgegangen. Dies kann - wie beim Entladen des KFZ - auch in der Weise geschehen, daß das Gestell 30 zusammen mit dem Behälter 10 und der Einrichtung 20 wieder "aktiviert" wird, d. h. von der Lager-Position L in die Transport-Position T "entfaltet" wird.

Dies wird nachfolgend am Beispiel des Verstauens des Behälters 10 im Detail beschrieben, der fest mit dem Gestell 30 verbunden ist, gilt jedoch in gleicher Weise auch für das Verstauen des Behälters 10 ohne Gestell 30, wenn dies aus Platzgründen erforderlich ist: Auch hier wird wie beim vergleichbaren Fall des Beladens oder Entladens des KFZ mit dem Behälter 1 vorgegangen.

Erfindungsgemäß kann beim "Einlagern" der Gegenstände mittels der Transport- und/oder Lager-Vorrichtung 1 der Übergang der Füße 33, 33' des Gestells 30 von der Transport-Position T in die Lager-Position L dadurch bewirkt werden, daß man die Transport- und/oder Lager-Vorrichtung 1 mittels des daran befestigten Gestells 30 in die Nähe eines zum Lagern bestimmten Orts bewegt. Die Höhe des Behälters 10 im Verhältnis zu den Einrichtungen am Lagerort, beispielsweise zu der/den Schiene(n), die das Anlegen zum Lagern erleichtern soll(en), wird durch Adjustieren des Gestells 30 angepaßt. Sobald die (in Einlager-Richtung des Behälters 10) vorderen Rollen 31, 31' am Gestell 30 den Punkt erreicht haben, an dem sie in die Schiene(n) am Lagerort eingreifen, wird der (in Einlager-Richtung des Behälters 10) vordere Fuß 33 des Gestells 30 von der Transport-Position T in die Lager-Position L geschwenkt (und verliert dabei den Kontakt zur Fläche (z. B. zum Boden), auf dem er vorher noch stand bzw. bewegt wurde. Der andere Fuß 33' mit den Rollen 31" bzw. 31''' bzw. den beiden hinteren Rädern bleibt weiter mit der Fläche bzw. dem Boden in Kontakt, um das Einziehen des Behälters 10 (durch Körperkraft des Benutzers oder durch Betätigen einer Automatik) zu unterstützen. Erst mit dem oder kurz nach dem Moment, zu dem die (in Einlager-Richtung des Behälters 10) hinteren Rollen 31, 31' am Gestell 30 den Punkt erreicht haben, an dem sie ebenfalls in die Schiene(n) eingreifen, wird der (in Einlager-Richtung des Behälters 10) hintere Fuß 33 des Gestells 30 ebenfalls von der Transport-Position T in die Lager-Position L geschwenkt (und kann dann ebenfalls den Kontakt zur Fläche (z. B. zum Boden), auf dem er vorher noch stand bzw. bewegt wurde, verlieren). Der Behälter wird dann auf den auf der/den Schiene(n) laufenden Rollen 31, 31', 31 ", 31''' bzw. Rädern am Lager-Ort in die Ruhe-Position geschoben oder (automatisch) gezogen und dort gesichert.

Beim "Reaktivieren" des Behälters 10 am Lager-Ort wird genau in umgekehrter Reihenfolge der Schritte vorgegangen wie beim Einlagern: Der Behälter 10 wird entsichert. Die Schiene(n) wird/werden (gegebenenfalls automatisch) ausgefahren, und der Behälter 10 wird auf den Rollen 31, 31 31", 31''', die auf bzw. in der/den Schiene(n) laufen, gegebenenfalls automatisch aus Lager-Position bewegt oder manuell gezogen. Bevor die (beim Ausfahr-Vorgang voranlaufenden) hinteren Rollen 31 ", 31''' das Ende der Schiene(n) erreichen, auf bzw. in denen sie laufen, wird der (beim Auslager-Vorgang voranlaufende) hintere Fuß 33' aus der Lager-Position L in die Transport-Position P geschwenkt, so daß die Räder 31 ", 31''' den Boden bzw. die Fläche berühren, auf der die Räder des Gestells 30 später laufen sollen. Beim weiteren Auslagern, also kurz bevor die (beim Auslager-Vorgang hinterherlaufenden) vorderen Rollen 31, 31' das Ende der Schiene(n) erreichen, auf bzw. in denen sie laufen, wird der (beim Auslager-Vorgang hinterherlaufende) vordere Fuß 33 aus der Lager-Position L in die Transport-Position P geschwenkt, so daß die Räder 31, 31' den Boden bzw. die Fläche berühren, auf der die Räder des Gestells 30 später laufen sollen. Sobald alle vier Räder 31, 31', 31", 31''' wieder stabil auf dem Boden stehen, kann der Behälter 10 der erfindungsgemäßen Transport- und/oder Lagervorrichtung wieder leicht und bequem mit Hilfe des Gestells 30 bewegt bzw. gefahren werden, gegebenenfalls mit Hilfe eines Motors, wenn das Gestell einen solchen aufweist. Die herausgezogene(n) Schiene(n) wird/werden (gegebenenfalls automatisch) wieder eingefahren.

Die erfindungsgemäße Transport- und/oder Lager-Vorrichtung 1 kann in jeder der beschriebenen, gegebenenfalls bevorzugten Ausführungsformen in einer Vielzahl von Anwendungsbereichen benutzt werden. So läßt sich die Vorrichtung 1 zum Transportieren eines oder mehrerer schwerer Gegenstände verwenden. Die Gegenstände können eine eingekaufte Ware oder mehrere eingekaufte Waren sein, insbesondere schwere oder sperrige Ware(n), wie beispielsweise Kästen mit Getränke-Behältnissen (Flaschen, Dosen), Kisten mit Konserven (Gläser, Dosen), Kisten oder Kartons mit Bulk-Ware wie beispielsweise Waschpulver oder (festes oder flüssiges) Reinigungsmittel, aber auch lose oder angepackte Lebensmittel (z. B. größere Mengen Kartoffeln, Äpfel, Birnen, Kohlköpfe etc.). In einer anderen Ausführungsform der Erfindung wird die Vorrichtung 1 in ihren verschiedenen Ausführungsformen zum Lagern eines oder mehrerer der vorgenannten Gegenstände verwendet.

Weiter findet die erfindungsgemäße Transport- und/oder Lager-Vorrichtung 1 Verwendung beim Transport bzw. bei der Unterbringung sperriger bzw. schwerer Gegenstände wie beispielsweise Sport-Ausrüstungs-Gegenständen (z. B. Golf-Equipment, Jagd-Gewehre, Angel-Zeug, Fecht-Equipment, Segel- oder Surf-Ausrüstung).

In einer weiteren Ausführungsform findet die erfindungsgemäße Transport-und/oder Lager-Vorrichtung 1 Verwendung beim Transportieren von Reisegepäck. Nicht nur kann ein herkömmlicher Koffer in einem (genügend großen, beispielsweise als Wanne ausgebildeten) Behälter 10 der Vorrichtung 1 transportiert werden, beispielsweise in einem KFZ, sondern es kann auch ein speziell auf die Erfindung abgestimmter, als Koffer 17 ausgebildeter Behälter 10 zusammen mit den anderen Merkmalen der Erfindung (Einrichtung 20, gegebenenfalls Gestell 30) zum Transport für Reisezwecke verwendet werden.

In einer anderen Ausführungsform der Erfindung wird die Transport-Vorrichtung 1 verwendet zum Transport von Babys und/oder Kleinkindern, wobei sie so eingerichtet sein kann, daß ein Kind oder mehrere Kinder (z. B. zwei) transportiert werden. In einer solchen Ausführungsform ist der Behälter 10 der Vorrichtung 1 für das Aufnehmen eines Kindes (oder mehrerer Kinder) besonders eingerichtet, beispielsweise hinsichtlich eines kinderfreundlichen Materials oder einer kinderfreundlichen Innenauskleidung. Dies kann der Fachmann aufgrund seines Fachwissens entsprechend den Erfordernissen wählen.

Es ist erfindungsgemäß weiter möglich, die erfindungsgemäße Transport-und/oder Lager-Vorrichtung 1 zum Transport und/oder zur (zumindest vorübergehenden) Aufbewahrung eines oder mehrerer Tiere(s) zu verwenden. Dies ist von besonderem Vorteil in Fällen, in denen ein Transportbehälter für ein Tier (z. B. einen Hund) von seinem Besitzer nicht mehr in ein Fahrzeug geschafft werden kann, wenn dies zum Transport über eine längere Strecke erforderlich ist. Transport-Behälter 10 mit Gestell 30 gemäß der Erfindung könnten hier die gewünschte Abhilfe schaffen.

Weitere Verwendungen der erfindungsgemäßen Transport- und/oder Lager-Vorrichtung 1 ergeben sich für den Fachmann aus der vorangehenden Beschreibung und sind als unter die nachfolgenden Patentansprüche fallend anzusehen.

## Patentansprüche

1. Transport- und/oder Lager-Vorrichtung (1) für Gegenstände, umfassend
- einen Behälter (10) für das Aufnehmen von Gegenständen;
- an dem Behälter (10) mindestens eine Einrichtung (20), die das Einbringen des Behälters (10) in ein Fahrzeug und/oder das Anbringen des Behälters (10) an einem Lagerort und/oder das Befestigen des Behälters (10) an oder auf einem leicht bewegbaren Gestell erlaubt.

2. Transport- und/oder Lager-Vorrichtung (1) nach Anspruch 1, umfassend zusätzlich gegebenenfalls lösbar befestigbar an dem Behälter 10 und/oder an der Einrichtung (20) ein leicht bewegbares Gestell (30), vorzugsweise ein fahrbares Gestell (30), weiter bevorzugt ein lenkbar fahrbares Gestell (30), am meisten bevorzugt ein Höhen-adjustierbares lenkbar fahrbares Gestell (30).

3. Transport- und/oder Lager-Vorrichtung (1) nach Anspruch 1 oder Anspruch 2, worin das bewegbare, vorzugsweise fahrbare, Gestell (30) ein mit mindestens drei Rollen bzw. Rädern (31, 31', 31") versehenes Gestell (30) ist, weiter bevorzugt ein mit mindestens vier Rollen bzw. Rädern (31, 31 31", 31''') versehenes Gestell (30) ist, noch weiter bevorzugt ein mit mindestens vier getrennt voneinander ausrichtbaren Rollen bzw. Rädern (31, 31 ', 31", 31''') versehenes Gestell (30) ist.

4. Transport- und/oder Lager-Vorrichtung (1) nach einem der Ansprüche 1 bis 3, worin die mindestens drei Rollen bzw. Räder (31, 31 ', 31", ...) an zwei getrennten Füßen (33, 33') des bewegbaren Gestells (30) angeordnet sind und den Füßen (33, 33') vorzugsweise Einrichtungen (34, 34') zugeordnet sind, die ein getrenntes Bewegen der Füße (33, 33') von einer Transport-Position (T) in eine Lager-Position (L) erlauben, weiter bevorzugt worin die Einrichtungen (34, 34') in der Transport-Position (T) ein Bewegen der Vorrichtung (1) mit Lasten erlauben, und die Einrichtungen (34, 34') in der Lager-Position (L) ein sicheres Ruhen der Vorrichtung (1) mit Lasten während des Transports oder an einem Lagerort erlauben.

5. Transport- und/oder Lager-Vorrichtung (1) nach einem der Ansprüche 1 bis 4, worin der Behälter (10) ein Korb (11), eine Tasche (12), ein Kunststoff-Behälter (13), eine Transport-Wanne oder ein Koffer (17) ist.

6. Transport- und/oder Lager-Vorrichtung (1) nach einem der Ansprüche 1 bis 5, worin der Behälter (10) mit einem öffenbaren Deckel (14) versehen ist, vorzugsweise mit einem sicherbaren und/oder verschließbaren Deckel (14) versehen ist.

7. Transport- und/oder Lager-Vorrichtung (1) nach einem der Ansprüche 1 bis 6, worin die mindestens eine Einrichtung (20) an der Unterfläche (15) des Behälters (10) und/oder an mindestens einer der Seiten (16, 16', 16", 16''') des Behälters (10) angebracht ist, vorzugsweise worin mehrere Einrichtungen (20) an der Unterfläche (15) des Behälters (10) und/oder an mindestens einer der Seiten (16, 16', 16", 16''') des Behälters (10) angebracht sind.

8. Transport- und/oder Lager-Vorrichtung (1) nach einem der Ansprüche 1 bis 7, worin die mindestens eine Einrichtung (20) einen Läufer (21) zum Bewegen des Behälters (10) in ein Fahrzeug aufweist, vorzugsweise mindestens zwei Rollen (22, 22') , noch mehr bevorzugt zwei bis mindestens vier Rollen (22, 22', 22", 22'''), zum Einschieben des Behälters (10) in ein Fahrzeug aufweist, noch weiter bevorzugt vier Rollen (22, 22', 22", 22''') zum Einschieben des Behälters (10) auf gesondert daran angepaßten Einrichtungen in einem Fahrzeug aufweist, am meisten bevorzugt vier Rollen (22, 22', 22", 22''') zum Einschieben des Behälters (10) auf gesondert daran angepaßten Einrichtungen und zum Verankern in einem Fahrzeug aufweist.

9. Transport- und/oder Lager-Vorrichtung (1) nach einem der Ansprüche 1 bis 8, worin die mindestens eine Einrichtung (20) einen Läufer (21) zum Bewegen des Behälters (10) an oder auf einen Lagerort aufweist, vorzugsweise mindestens zwei Rollen (22, 22'), noch mehr bevorzugt zwei bis mindestens vier Rollen (22, 22', 22", 22'''), zum Einschieben des Behälters (10) an oder auf einen Lagerort aufweist, noch weiter bevorzugt vier Rollen (22, 22', 22", 22''') zum Einschieben des Behälters (10) auf gesondert daran angepaßten Einrichtungen an oder auf einem Lagerort aufweist, am meisten bevorzugt vier Rollen (22, 22', 22", 22''') zum Einschieben des Behälters (10) auf gesondert daran angepaßten Einrichtungen und zum Verankern an oder auf einem Lagerort aufweist.

10. Transport- und/oder Lager-Vorrichtung (1) nach einem der Ansprüche 1 bis 9, worin der Behälter (10) als Einkaufswagen-Korb (11) ausgebildet ist und einen Handgriff zum Bewegen, vorzugsweise zum Ziehen oder Schieben, aufweist.

11. Transport- und/oder Lager-Vorrichtung (1) nach einem der Ansprüche 1 bis 9, worin ein als Koffer (17) ausgebildeter Behälter (10) auf einer der Behälter-Seiten 16 Rollen und auf einer anderen der Behälter-Seiten 16 eine Einrichtung zum Ziehen oder Schieben des als Koffer 17 ausgebildeten Behälters 10 aufweist, vorzugsweise einen Handgriff.

12. Verwendung einer Transport- und/oder Lager-Vorrichtung (1) nach einem der Ansprüche 1 bis 11 zum Transportieren eines oder mehrerer schwerer Gegenstände.

13. Verwendung nach Anspruch 12 zum Transportieren eingekaufter Waren.

14. Verwendung einer Transport- und/oder Lager-Vorrichtung (1) nach einem der Ansprüche 1 bis 11 zum Lagern eines oder mehrerer Gegenstände.

15. Verwendung nach Anspruch 14 zum Lagern eingekaufter Waren.

16. Verwendung einer Transport- und/oder Lager-Vorrichtung (1) nach einem der Ansprüche 1 bis 11 zum Transportieren sperriger Gegenstände.

17. Verwendung nach Anspruch 16 zum Transportieren von Sport-Ausrüstungs-Gegenständen wie beispielsweise Golf-Equipment, Jagd-Gewehre, Angel-Zeug, Fecht-Equipment, Segel-Ausrüstung oder Surf-Ausrüstung.

18. Verwendung einer Transport- und/oder Lager-Vorrichtung (1) nach einem der Ansprüche 1 bis 11 zum Transportieren mindestens eines Babys oder Kindes.

19. Verwendung einer Transport- und/oder Lagervorrichtung (1) nach einem der Ansprüche 1 bis 11 zum Transportieren mindestens eines Tieres.
